# EUROPEAN PATENT APPLICATION

(11) **EP 0 830 021 A2**
(43) Date of publication of application: **18.03.1998**
(21) Application number: 97104068.8
(22) Date of filing: 11.03.1997
(51) Int. Cl.: H04N 5/74

(54) **Dual-use video display system**

(30) Priority: 11.09.1996 US 715505
(71) Applicant: Projectavision, Inc., New York, NY 10121 (US)
(72) Inventor: Dettling, Monica A., Freeport, NY 11520 (US); Blitz-Taskale, Dara, Lake Ronkonkoma, NJ 11779 (US); Holleran, Martin J., Rumson, NJ 07760 (US); Langer, Sherman, Maplewood, NJ 07040 (US); Maslow, Marvin, New York, NY 10021 (US); Montalbano, Christopher P., Great Neck, NY 11021 (US); Montalbano, Antony P., Shelter Island Heights, NY 11965 (US); Montalbano, Gregory A., Great Neck, NY 11021 (US); Fleischer, Eric C., Rockville Centre, NY 11570 (US)
(74) Representative: Fleuchaus, Leo, Dipl.-Ing.

(57) **Abstract**

The video display system comprises a cabinet including a removable projector incorporating a liquid crystal disply, digital light processing or other electronic video display technology, said video display system being adapted to be used in a rear projection mode, when the projector is located in the cabinet in a fixed relationship to the screen, or in a front projection mode, when the projector is removed from the system.

## Description

### BACKGROUND OF THE INVENTION

### 1. FIELD OF THE INVENTION

The present invention is directed to a video display system having a cabinet and including a projector incorporating liquid crystal display, digital light processing (DLP™) or other electronic video display technology and adapted to be used in such system in a "rear" projection mode or in a "front" projection mode when the projector is removed from the system.

### 2. DESCRIPTION OF THE PRIOR ART

At present, there are available rear-screen video display systems typically including a large cabinet containing mirrors and a video projector within the cabinet. Such cabinets are very cumbersome, heavy, have large depth and the optics therein must be carefully aligned, particularly if there are three images emanating from three CRTs in the cabinet. Further, if the projector and mirrors inside the cabinet are moved in relation to the screen, the image becomes poor because proper convergence is destroyed. This often results in color fringing.

Additionally, such rear screen video display systems are typically neither portable nor "modular" in construction, and the various components of the system are not separable or foldable for portability, ease of component replacement and/or packaging convenience.

Furthermore, such rear screen systems include a projector which is not easily detachable and otherwise adaptable in order to be used in a "front" projection mode.

Projection video display systems which do not require a screen and which project an image directly onto a wall are described in Projectavision's U.S. Patent Nos. 5,012,274 and 5,300,942. However where there is, for instance, inadequate wall space or if the wall is painted in a dark color, or the wall has irregular surfaces, or is in a very brightly lit room, images from such projection television video display systems are not easily and clearly viewable. Additionally, there is often no place to position the projector conveniently, and people could inadvertently walk into the beam path.

A rear screen video display system with a collapsible, portable rear screen video display cabinet is also disclosed in Projectavision's U.S. Patent No. 5,491,585.

There are also available CRT rear screen projection televisions, but they are very heavy and bulky and occupy much space in a typical room. Furthermore, movers are required for installation of such units and subsequently moving such units is extremely difficult.

Additionally, certain projection video display images of certain rear screen video display systems are of poor quality.

Accordingly, an object of the present invention is a video display system with a projector which is easily and rapidly removable from a cabinet and which is usable "inside" or "within" the system in a "rear" projection mode and outside the system in a "front" projection mode.

Another object of the invention is a video display system in which the projector is easily insertable and properly positionable within the system in a fixed position.

Still another object of the invention is to provide a video display system which is foldable (collapsible), easily portable and shippable within, for instance, standard UPS® and Federal Express® allowances.

Furthermore, an object of the invention is a rear screen video display system which is less bulky in appearance.

A further object of the invention is a video display system in which components of the overall system are "modular" in construction for portability, easy replacement of major components and for packaging convenience.

An additional object of the invention is a video display system having a safety feature which terminates flow of power to the interface between the projector and the system upon removal of the projector.

A still further object of the invention is a video display system which is easily assembled once removed from its shipping containers.

### SUMMARY OF THE INVENTION

These and other objects of the invention, which shall become apparent hereafter, are achieved by providing a video display system including a cabinet having a base unit, a screen unit, a pedestal having a projector housing or "docking" station for receiving the projector, and having mechanical and/or electronic connections and means for easily inserting and accurately positioning the projector in the docking station.

In an embodiment, the screen unit is removable from the central pedestal which, in turn, is removable from the base unit. The screen unit in an embodiment unfolds from a thin profile into an A-frame operational configuration.

In a preferred embodiment, the video display system incorporates digital light processing technology featuring digital micro-mirror device (DMD™) semiconductor light switches in a light valve to better address each pixel image.

### BRIEF DESCRIPTION OF THE DRAWINGS

The invention will be better understood from the following Detailed Description of the Preferred Embodiment, when read with reference to the accompanying drawings, in which:
Figure 1 is a front, perspective view of the video display system according to the present invention;
Figure 2 is an exploded front perspective view of the video display system of Figure 1;

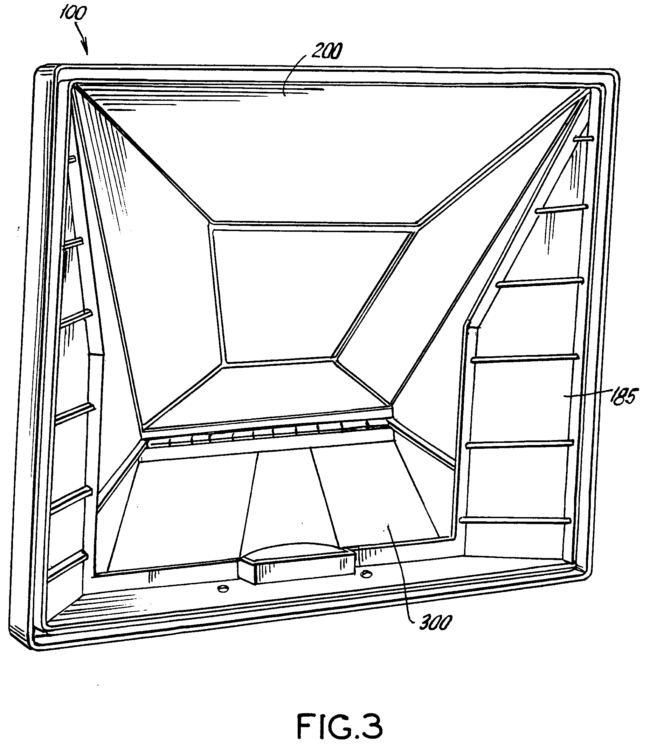

Figure 3 is a front angular perspective view of the screen unit of the video display system;
Figure 4 is a top, cross-sectional view of the screen unit depicting how the screen is secured;
Figure 5 is a side view of the screen unit showing the pivot points which facilitate the folding and unfolding of the screen unit into operational position;
Figure 6 is a side view of the video display system showing a docking station in the pedestal for holding the projector in an operational position;
Figure 7 is also a side view of the video display system showing the docking station, but with the projector housing in an open position for removal and insertion of the projector;
Figure 8 is a schematic side view of the system's base and pedestal showing the relative position of the projector and adapter board attached and exposed at the rear of the pedestal, for use of the projector in a rear projection mode;
Figure 9 is a side, cross-sectional view of the projector showing the relative position of the adapter board when the projector is to be used in front projection mode;
Figure 10 is a partially cut-out, perspective view of the projector housing of the docking station of the video display system, showing a connector, connector mount and position slots;
Figure 11 is a perspective view of another embodiment of the connector in the hamper;
Figure 12 is a perspective view of yet another embodiment of the connector in the hamper;
Figure 13 is a rear perspective view of the projector showing the adapter board;
Figure 14 is a see-through view of the hamper for holding the projector, showing the projector connector and position slots;
Figure 15 is a schematic of the truncated pyramidal "self-aligning" compliant connector mount;
Figure 16 is a schematic of the projector locating scheme showing the position slots and locating pins;
Figure 17 is a front, perspective view of the projector showing bi-directional signal receiving ability of the IR receiver on the projector; and
Figure 18A and 18B are front and side cross-sectional views.

### DETAILED DESCRIPTION OF THE PREFERRED EMBODIMENTS

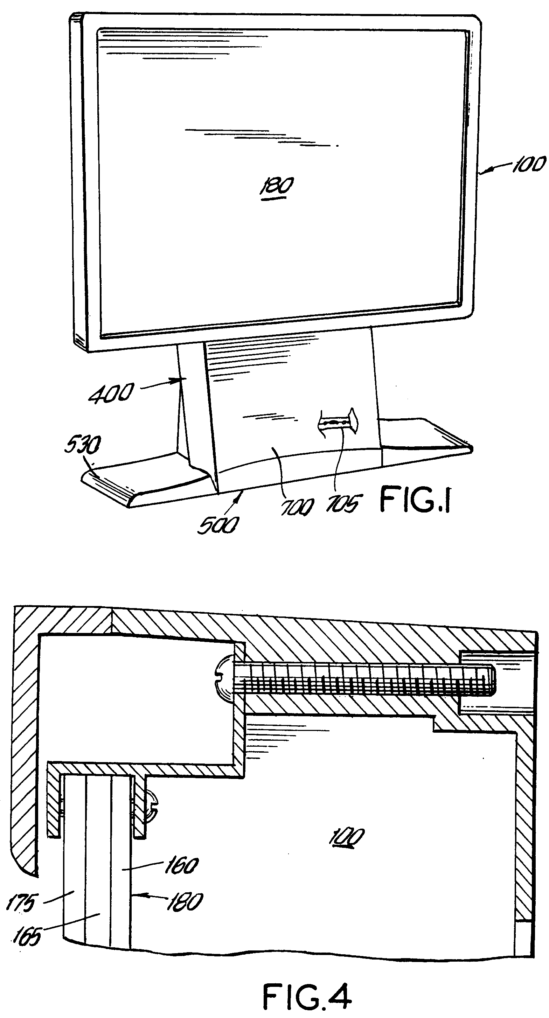

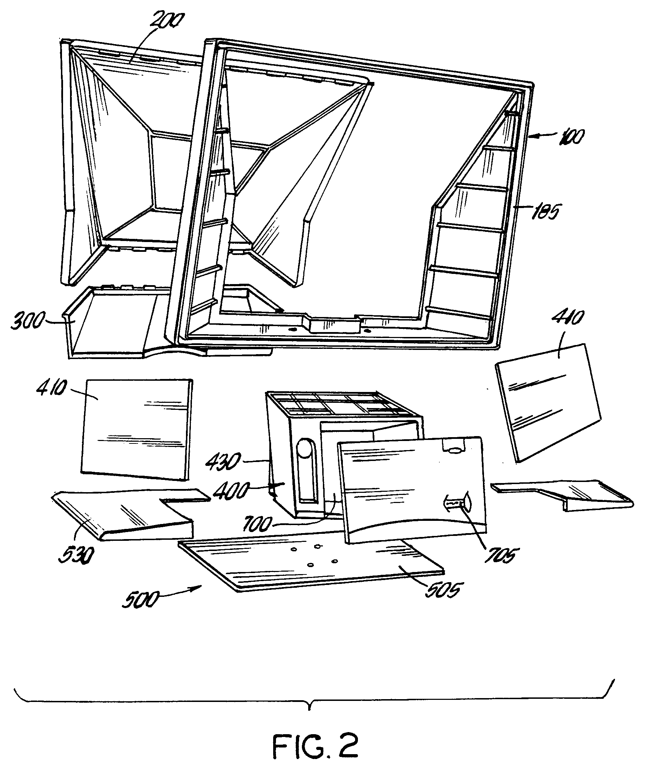

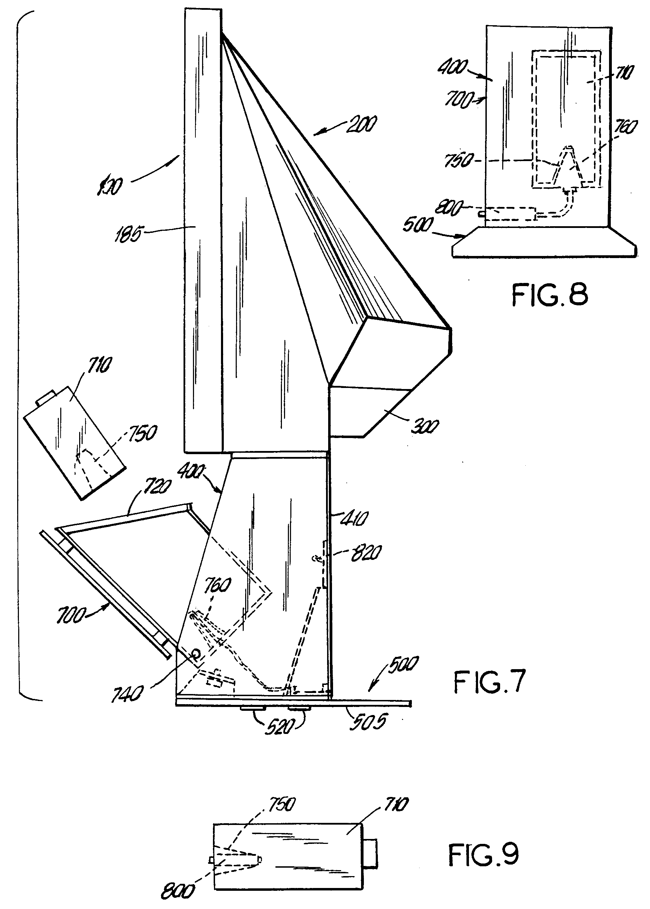

Referring to the drawings, wherein like numerals reflect like elements throughout the several views, Figure 1 is a front, perspective view of the dual-use video display system according to the present invention. The main structural components of the cabinet are generally injection molded of a glass filled Noryl® material and include a screen unit 100, a pedestal 400 and a base unit 500. The screen unit 100 has an upper mirror panel 200 (see Figure 2) and a lower 300 mirror panel, mirror 120 (see Fig. 5), screen support 185 and a screen 180. The pedestal 400 supports the screen unit 100 and has a "docking station" 700 (see Fig. 7) for holding a projector 710 in operational condition within the system. A projector control access slot 705 in front of the pedestal 400, allows a system user to access the projector controls without having to remove the projector 710 from the docking station.

The screen unit 100 opens into an "A" frame shape, as it has a collapsible back (see Figure 5), which folds in and extends out, assisted by two pivot points 190, 195. The collapsibility of the A-frame permits the screen unit 100 to have a shallow profile to decrease volume of shipping purposes. The "A" frame also prevents user access to the front of the mirror's surface and the rear of the viewing screen 180 when the screen unit 100 is collapsed. The screen unit 100 may also include consumer removable picture frames 220 which circumscribe the screen 210. Such frames 220 may be interchangeable to suit decorative tastes or, for instance, if they become worn.

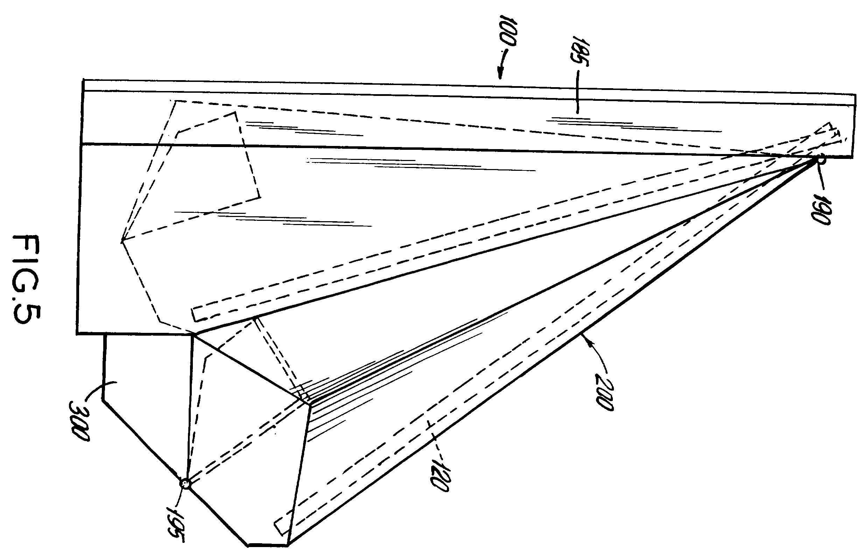

The viewing screen (see Figure 4) is secured by injection molded horizontal and vertical screen bezels 130 to the screen support 185 and comprises various layers. In one embodiment, the screen 180 comprises three layers, namely (a) a Fresnel sheet 160 (approximately 39" x 50" and about 0.16" thick) which addresses wide angle light and collimates it through the screen, (b) lenticular lenslets 165 and (c) black stripes 175 for ambient light rejection. There may optionally be a cover of a thin plastic sheet of optical quality to prevent fingerprints or smudges. In another embodiment, the screen has two layers, a Fresnel layer 160 and a diffusive layer 155 which scatters the light.

The preferred optical characteristics of the screen are as follows:

| **DESCRIPTION** | **VALUE** |
|---|---|
| SCREEN P.G. | 6.5+/-0.7 |
| SCREEN & V | 6°+-1° |
| ACREEN & H | 40°, -2°+5° |
| FRESNEL TRANSMITTAL | >85% |
| FRESNEL FOCAL LENGTH | 1000mm+/-2mm |
| FRESNEL PITCH | 0.112mmX915mm |
| ACTIVE AREA | 1220mmx915mm |
| LENGTH X WIDTH X THICKNESS | 1244.6mmX939.8mmX3.97mm |

The mirror 120 is sandwiched between front edges 210 of the mirror panel 200 and rear edge 190 of the screen unit 100 is a mirror 120 (see Figure 7). The mirror is trapezoidal and is comprised of a thin transparent plastic film, coated with a reflecting surface layer and tensioned on a rigid foam support structure.

The following table describes preferred optical, mechanical, and environmental requirements of the mirror:

| **ITEM** | **QUANTITY** |
|---|---|
| REFLECTIVITY OVER THE VISIBLE | 94% |
| LENGTH X WIDTH X THICKNESS (trapezoid) | 50X35X25 inches (approx.) |
| PANEL COLANDER FLATNESS | +/-1/8" |
| PANEL EDGE BOW | +/-3/32" |
| THERMAL | -20°C for 1-1/2 HR, RAMP UP FOR 1-1/2HRS TO +50°C FOR 1-1/2 HR, CYCLE TIME: 10 |
| HUMIDITY | 24 HRS at 49° AND 95% RH |
| CORROSION | SALT FOG 5% SOLUTION 100 HRS AT 49° |
| MOUNTINGS | 2 SPRING LOAD 10-32 INSERTS, 1 FIXED 10-32 INSERT |

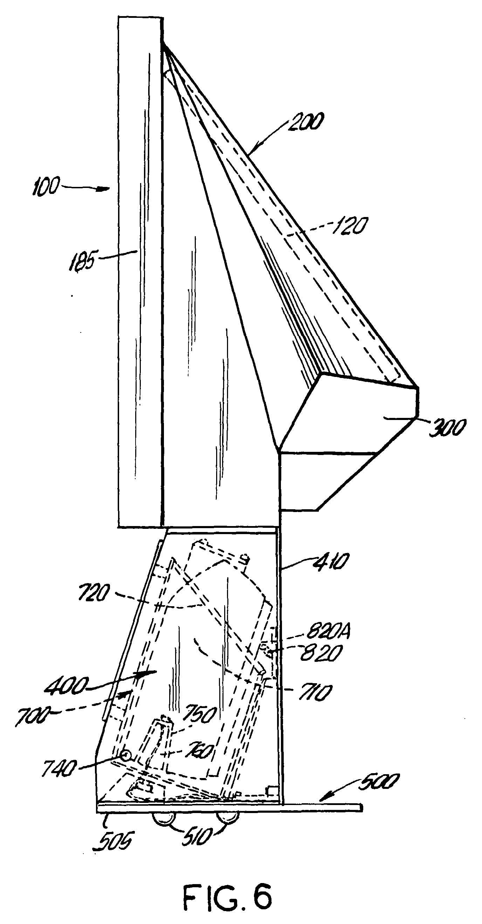

The base unit has a base plate 505 (see Figure 2) which, along with pedestal 400 should be of sufficient weight and configuration to prevent tipping of the overall system when a projector 710 is inserted or withdrawn from the projector hamper 720 which houses it (see Figures 6 and 7). The base plate 505 contains 4 bolts (see Figure 1) for mounting pedestal 400 and preferably weighs about 15 pounds and optionally has locking wheels and/or rollers 510 (see Fig. 6) which allow movement of the system with the projector inside. The bottom of the base plate 505 also contains recesses for snap-in skid pads 520 (see Fig. 7). Base plate coverings 530 cover the base plate 505 and provide a better aesthetic appearance. Such coverings 530 are also easily changeable if they become worn or simply to suit decorative tastes.

Between the base unit 500 and the screen unit 100 is pedestal 400 (see Figures 6 and 7). The pedestal further includes an injection molded lower rear support structure 430 (see Figure 2) which weighs approximately two pounds. In a preferred embodiment, the pedestal 400 has a width substantially less than the length of the screen 210. However, pedestal attachments 410 (see Figure 2) can be added to fill-in space and give the overall system a more "box-like" appearance. The attachments 410 may be substituted for speakers, shelving, etc... The pedestal allows sufficient air-flow so that the projector 710 does not overheat, i.e., it should preferably dissipate approximately 250 watts of heat, which represents heat of a potential combination projector/tuner, VCR, and compact disk player. An injection molded hamper 720 (see Fig. 7), weighing approximately one pound is also injection molded and weighs approximately three pounds, is built into pedestal 400. The hamper 720 allows for easy switching of the projector between front and rear projection modes.

The overall time for the average consumer to assemble the complete system is preferably no more than 30 minutes. No special tools are required. All assembly and structural hardware is kept to the minimum. The complete system is preferably containable within three containers. The lower base, pedestal and screen unit are separately detachable to ease shipping and customer assembly. The overall cabinet may be shipped in a box having a length and girth ≤ 165" to meet U.P.S. and Federal Express guidelines.

Figure 7 is a side view of the system depicting the hamper 720 in an open position. To insert (or remove) projector 710, the user must open the hamper by either a mechanical means, such as a handle (note pivot point 740), or by any motorized means, and slide the projector 710 into position aided by certain self-aligning mechanisms as described herein. In rear projection operating mode, the projector 710 (see Fig. 6), sits in a hamper 720 and projects an image toward mirror 120 which reflects the image to the screen 210. In addition to the projector 710, a front projection lens, remote control, extra replacement bulbs, etc... may also be stored in the hamper 720.

An inward slopping flange on the upper edge of the hamper 720 and slightly tapered sides of the hamper 720 facilitate initial gross self-alignment of the projector 710 during insertion. The projector 710 and the hamper 720 are of a complementary shape so that the projector 710 fits with relatively little lateral motion (< +/- 0.25 inches).

The projector 710 has a cavity 750 at its bottom end to allow for the insertion and partial containment of adapter board 800 when the projector 710 is used in front projection mode. The truncated-pyramidal connector mount 760 positions the connector 910 at a distance above the bottom of the hamper 720 such that it can mate with the complementary connector in the projector cavity. (See Figure 19.) The truncated-pyramidal form of the connector mount 760 ensures that the connector mount 760 achieves gross alignment with the projector 710 while the projector is inserted in the hamper for use in rear projection mode.

In a preferred embodiment, final self-alignment of the connector is achieved by the mating of two tapered pins 915 (see Figure 19) on the "sub D" connector on the compliant connector mount with complementary holes on the mating connector in the projector cavity 750.

Figures 8 and 9 depict the projector 710 and two adapter boards 800, 801 in the rear and front projection modes respectively. In rear projection mode, the adapter board resides in the pedestal unit 400 and is accessible from the back of the pedestal. The power and the signal are input from the back of the unit. In front projection mode, the power and signal go in to the rear of the projector via adapter board 801.

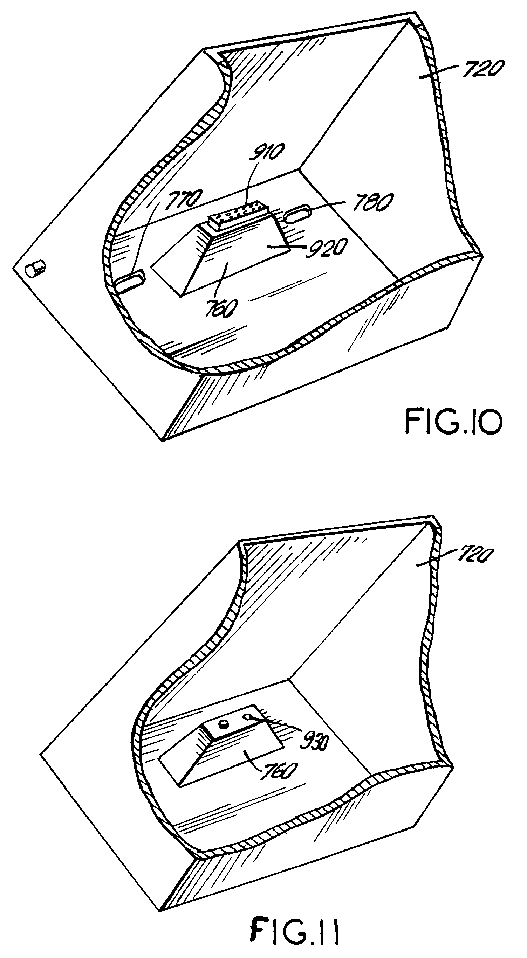

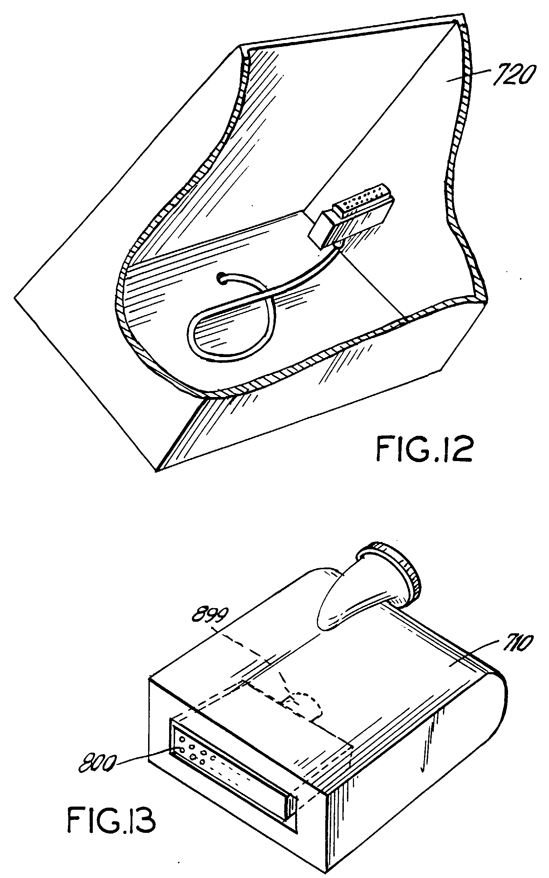

Figures 10-12 depict three embodiments of projector connections in the hamper 720. In the Figure 10 embodiment, there is a single connector 910 at the upper end of a mount 920. Figure 11 depicts two connection points. Connector point 930 has a plurality of connection points, e.g., for power and signal, concentrated into one mechanical element. Figure 12 again depicts a single connector which is "loose" for making a manual connection prior to placement of the projector in the hamper.

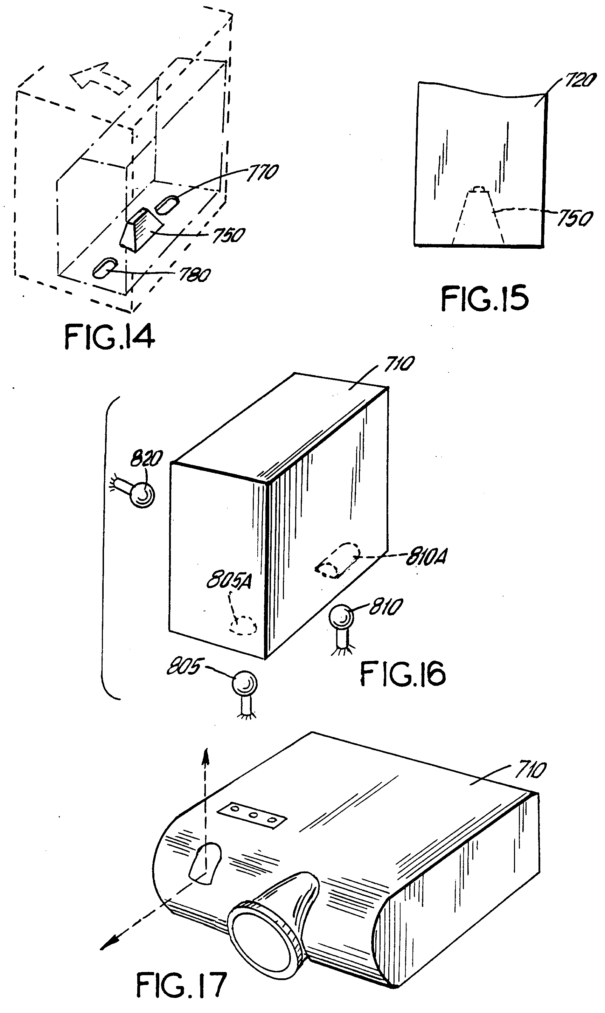

Once the projector 710 is correctly inserted and the hamper closed, a releasably locating feature, best demonstrated in Figures 14-16, assures that the projector is accurately positioned for operation. The hamper 720 has cutouts 770, 780 (see Figure 14) which respectively receive locating elements (balls) 800, 810 (see Figure 16), while ball 820 comes into contact directly with projector 710 (see Figure 16). Upon closing the hamper 720, ball 800 comes into contact with socket 800A and constrains movement of the projector 710 along the X, Y and Z axes. Ball 810, upon closing of the hamper 720, fits into groove 810A, and constrains movement of the projector 710 in the θx and θz axes, while ball 820 rests against planar region 820A, and constrains movement of the projector 710 and hamper 720 in the θy direction. The three ball locating system provides for accurate location of the projector 710.

In order to preserve this precise location, all other connections to the projector (e.g. power + signal) must float mechanically. This is achieved in the preferred embodiment by compliance in the connector mount. In this embodiment compliance is achieved by making the connector mount 750 of an elastomeric material.

The cavity 750 is contiguous with the end panel of the projector containing socket 800A and groove 810A. (See Figure 18A.) The groove and socket, when resting on locating balls 810 and 800 respectively, determine the vertical location of the projector 710 within the cabinet, and therefore determine the length of the optical path between the projector 710 and the screen 180.

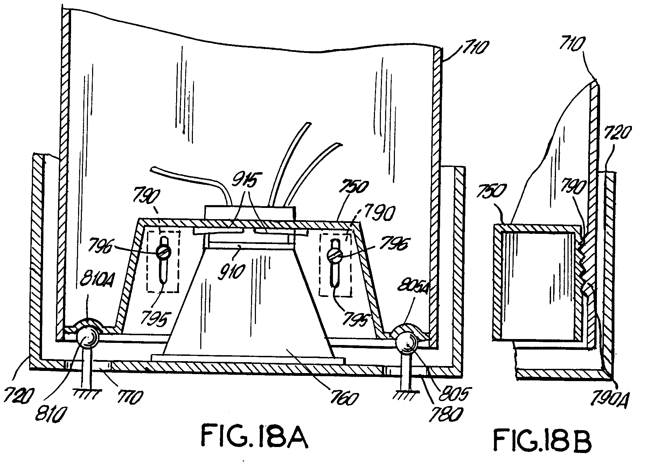

Because of slight manufacturing variations in the elements that make up the lens system, each projector will have a slightly different focal length. In order to eliminate variation in the image size projected on the screen, so that for example all image sizes in all systems are 60 +/- 0.25 inches, projector engines may have to be located at different distances from the screen 180. In the preferred embodiment, differences in this distance are achieved by adjusting the location of the groove 810A and socket 800A within the projector 710. The adjustment is done once during manufacturing. Once the adjustment is completed, any projector 710 will provide a nearly identical image size in any cabinet, allowing for interchnageability for convenience in manufacturing, service, and upgrade. The adjustment of the location of the groove and socket within the projector is achieved by positioning the cavity 750 within the projector 710 using slots 795 and fasteners 796. Two pairs of interlocking serrated regions 790 and 790A (See Figure 18B) ensure that once the fasteners are tightened, there can be no relative motion between the cavity and the projector.

The docking station routes all cabling/connections so that they are not accessible to the user. Any cabling within the docking station causes no signal loss between the projector and the rear connections. All manual controls such as Power ON/OFF, volume, and channel are preferably contained on the projector 710 itself and is accessible to the user from the front of the cabinet. The pedestal 400 allows for repeatable alignment of the projector 710 as well as ease of placement, i.e., preferably no more than 5 lbs. of force. The alignment mechanism preferably withstands 5000 insertions/removals.

Figure 13 shows the projector with adapter board 800 incorporated in its rear. The following connectors are accessible on the rear of the cabinet via the adapter board:

| **ITEM** | **QUANTITY** | **DESCRIPTION** | **PART NUMBER/MANUFACTURER** |
|---|---|---|---|
| VIDEO COMPOSITE/INPUT | 3 | 3 MM RCA Jack | |
| VIDEO COMPOSITE/OUTPUT | 1 | 3 mm RCA Jack | |
| S-VIDEO/INPUT | 2 | 4 pin mini DIN Connector | |
| S-VIDEO/OUTPUT | 1 | 4 pin mini DIN Connector | |
| SVGA INPUT | 1 | 15 pin High Density Sub-mini D type | |
| Antenna | 2 | F-Connector | |
| Audio Right In | 3 | 3 mm RCA Jack | |
| Audio Left In | 3 | 3 mm RCA Jack | |
| Audio Out Right | 1 | 3 mm RCA Jack | |
| Audio Out Left | 1 | 3 mm RCA Jack | |

| Audio Computer Stereo Input | | | |
|---|---|---|---|
| Stereo Terminal Block | 1 | 4 position | |
| Power | 1 | 110 VAC, 60Hz, 3-Prong | |

As a safety feature, the adapter board also contains circuitry such that power is not passed to the sub D (this is the connector on the compliant connector mount) connector 899 unless the projector is in place. As an additional safety feature, the adapter board comprises an open-door interlock system such that when the access door on the projector housing (for bulb replacement, etc.) is opened power is not passed to the sub D connector.

Any cabling and/or physical enclosures are designed so that they do not act as antennae - that is, any emissions will pass FCC, CFR 47, Part 15, Subpart B, Class A emission requirements. Any ventilation openings to electronics will be designed so that they prevent the consumer from inadvertent access per UL Standard 1492.

In one embodiment of the invention, a remote control (not shown), may work directly with the projector itself. This obviates the need to replicate a remote control signal receiver in the main unit itself. The remote operates in connection with a bi-directional IR receiver on the projector. (See Fig. 17.) The bi-directional nature of the IR receiver permits the remote control to be used within the projector in both the front and rear projection modes. This pair of receivers is necessary because of horizontal/vertical change in orientation when going from front to rear projector.

The electronics contained within the projector is preferably comprised of the Texas Instruments Light Engine (DMD), Video-Audio Processor, Power Supplies, Keypad, Adapter Board and Controller boards. It should be pointed out, of course, that liquid crystal displays (LCDs) or other electronic visual display projectors may alternatively be used.

The light valve system is housed in approximately the following dimension: 12"W x 11.5"D x 6.5"H and will have an air intake located at bottom and exhausts at top. The above dimensions include enough space for a 6" x 8" printed circuit board to be mounted.

Connectors and electronics are provided such that the overall system can be used as a computer SVGA monitor in either front or rear projection mode.

The projector includes a projector engine comprising a light valve system and electronics contained within an enclosure and a lens. Because the focal length requirements for front and rear projection and substantially different, at least two lens systems must be provided. The two alternative systems are:
- System 1: The lens system for the rear mode is contained in the cabinet and the lens for the front mode is contained in an anxillary front chassis (not shown). The projector engine may be used either within the cabinet or within the front chassis. The front chassis contains the front lens system as well as the hardware necessary for the projector to interface with VCR's, antenna's, etc.
- System 2: The user manually changes the lens systems to allow operation in the desired front or rear mode. This will require the rear cabinet to accept the projector with the rear lens attached. In the front projection mode, the user attaches a front lens and an adapter board is used that contains all the appropriate hardware for interfacing with VCR's, antenna's, etc.

The rear projection lens is used with the light valve system while it is inside of the cabinet and is capable of maintaining a 200:1 contrast ratio at a spatial frequency of 0.5 line pairs per mm measured at the spatial light modulator. The rear projection lens successfully images the light modulated by the digital mirror device at an appropriate distance with minimum performance specifications and contains no more than .004 mm of lateral chromatic aberration at the spatial light modulator. The rear projection lens has a transmission of greater than 80% across the entire visible spectrum, defined as 400 nm to 700 nm wavelengths. The overall system has a general requirement of producing 300 lumens.

Once the projector 710 is in the system, to use the projector 710 for front projection mode, the following steps should be undertaken:
(1) open hamper 720;
(2) pull out projector 710;
(3) exchange the projection lenses;
(4) insert adapter board 801; and
(5) connect power and signal cord.

While the preferred and alternate embodiments of the invention have been depicted in detail, modifications and adaptations may be adapted thereto, without departing from the spirit and scope of the invention as delineated in the following claims:

## Claims

1. A video display system, comprising:
a cabinet including a screen;
a projector removably secured in the cabinet and adapted for front and rear projection of an image;
a means for releasably locating said projector in the cabinet in a fixed relationship to said screen;
means for consolidating detachable connections of signal and power to the projector; and
mirror means located in the cabinet for reflecting an image from the projector to the screen when the projector is used in the rear projection mode.

2. The video display system of claim 1, wherein the cabinet comprises:
means for holding the screen; and
means for supporting said projector in the cabinet.

3. The video display system of claim 2, wherein said holding means and said support means are separable.

4. The video display system of claim 1, wherein said releasably locating means comprises at least three locating elements.

5. The video display system of claim 1, wherein said releasably locating means comprises ball in socket.

6. The video display system of claim 2, wherein said releasably locating means comprises ball in groove.

7. The video display system of claim 3, wherein said releasable locating means comprises ball against a plane.

8. The video display system of claim 1, further comprising a self-aligning means for establishing said detachable connections.

9. The video display system of claim 1, wherein said releasably locating means comprises a hamper.

10. The video display system of claim 8, wherein said self-aligning means comprises a compliant connector mount.

11. The video display system of claim 10, wherein said compliant mount is on a base surface of the hamper.

12. The video display system of claim 10, wherein said compliant mount is on the projector.

13. The video display system of claim 2, further comprising means for actuating projector controls while said projector is positioned in said support means.

14. The video display system of claim 13, wherein said means for actuating controls comprises an aperture in the pedestal.

15. The video display system of claim 1, further comprising a remote control communicating with the projector.

16. The video display system of claim 2, wherein said holding means comprises means for collapsing the screen.

17. The video display system of claim 2, wherein said means for supporting said projector is a substantially vertical support member having a width substantially smaller than length of the screen.

18. The video display system of claim 15, wherein said consolidation means comprises an adapter board.

19. The video display system of claim 18, further comprising means for suspending power to the connection means if said projector is not connected.

20. The video display system of claim 18 anteceder, wherein said adapter board comprises indication means for front/rear mode such that projector circuitry enables appropriate IR receiver means for a remote control.

21. The video display system of claim 20, wherein the receiver for said remote control comprises a pair of (substantially orthogoral) receivers, one adapted for front projection mode and the other adapter for rear projection mode.

22. The video display system of claim 18, wherein said means for suspending power comprises an open-door indicator on said projector.

23. The video display system of claim 4, further comprising means for adjusting the position of the optical system with respect to said locating elements.

24. The video display system of claim 23, wherein said adjustment means comprises interlocking geometric features.
